(19) Europäisches Patentamt
European Patent Office
Office européen des brevets

(11) **EP 2 455 356 B1**

(12) **FASCICULE DE BREVET EUROPEEN**

(45) Date de publication et mention
de la délivrance du brevet:
**20.11.2013 Bulletin 2013/47**

(51) Int Cl.:
***C04B 38/00*** (2006.01)    ***C04B 41/50*** (2006.01)
***H01M 4/62*** (2006.01)    ***H01M 4/583*** (2010.01)
***C01B 31/00*** (2006.01)    ***C04B 41/85*** (2006.01)

(21) Numéro de dépôt: **11190322.5**

(22) Date de dépôt: **23.11.2011**

(54) **Matériau carboné poreux monolithique modifié au soufre, son procédé de préparation et ses utilisations pour le stockage et la restitution d'énergie**

Monolithisches Material aus porösem Kohlenstoff, das durch Schwefel modifiziert ist, sein Herstellungsverfahren und seine Einsatzmöglichkeiten zur Speicherung und Rückgewinnung von Energie

Sulphur-modified porous carbon material, method for preparing same and uses thereof for storing and redelivering power

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2010 FR 1004550**

(43) Date de publication de la demande:
**23.05.2012 Bulletin 2012/21**

(73) Titulaire: **Hutchinson**
**75008 Paris (FR)**

(72) Inventeurs:
• **Ayme-Perrot, David**
**68330 Huningue (FR)**
• **Dieudonné, Marie**
**12210 Laguiole (FR)**
• **Sonntag, Philippe**
**77850 Hericy (FR)**
• **Pasquier, Anne-Caroline**
**91440 Bures Sur Yvette (FR)**

(74) Mandataire: **Mena, Sandra**
**Cabinet Orès**
**36, rue de St Pétersbourg**
**75008 Paris (FR)**

(56) Documents cités:
**WO-A2-2009/125094    US-A- 4 632 775**
**US-A- 5 993 996**

• **CALAHORRO C V ET AL: "Study of sulfur introduction in activated carbon", CARBON, ELSEVIER, OXFORD, GB, vol. 28, no. 2-3, 1 janvier 1990 (1990-01-01), pages 321-335, XP024032662, ISSN: 0008-6223, DOI: DOI:10.1016/0008-6223(90)90006-K [extrait le 1990-01-01]**
• **LAKSHMI N ET AL: "Functionalization of various carbons for proton exchange membrane fuel cell electrodes: analysis and characterization; Functionalization of carbons for fuel cell electrodes", JOURNAL OF PHYSICS D. APPLIED PHYSICS, IOP PUBLISHING, BRISTOL, GB, vol. 39, no. 13, 7 juillet 2006 (2006-07-07), pages 2785-2790, XP020094565, ISSN: 0022-3727, DOI: DOI:10.1088/0022-3727/39/13/022**
• **BAKER W S ET AL: "Sulfur-functionalized carbon aerogels: a new approach for loading high-surface-area electrode nanoarchitectures with precious metal catalysts", JOURNAL OF NON-CRYSTALLINE SOLIDS, NORTH-HOLLAND PHYSICS PUBLISHING. AMSTERDAM, NL, vol. 350, 15 décembre 2004 (2004-12-15), pages 80-87, XP004905644, ISSN: 0022-3093, DOI: DOI: 10.1016/J.JNONCRYSOL.2004.07.088**

**Description**

L'invention a pour objet un nouveau procédé de préparation de matériaux carbonés poreux monolithiques modifiés au soufre comprenant un pourcentage atomique surfacique en soufre variant de 0,01 à 0,5%, et présentant une densité comprise entre 0,5 et 1,3, les matériaux susceptibles d'être obtenus selon ce procédé, lesdits matériaux présentant des propriétés supercapacitives optimisées, et l'utilisation de ces matériaux pour produire des électrodes destinées à des systèmes de stockage d'énergie. La présente invention concerne également des électrodes constituées de matériaux carbonés poreux monolithiques modifiés au soufre selon l'invention, ainsi que des batteries au lithium et des supercondensateurs, aussi appelés condensateurs électrochimiques, comprenant de telles électrodes.

Les supercondensateurs consistent généralement en l'association de deux électrodes conductrices à haute surface spécifique, immergées dans un électrolyte ionique et séparées par une membrane isolante appelé « séparateur », lequel permet la conductivité ionique et évite le contact électrique entre les électrodes. Chaque électrode est en contact avec un collecteur métallique permettant l'échange du courant électrique avec un système extérieur. Sous l'influence d'une différence de potentiel appliquée entre les deux électrodes, les ions présents au sein d'un électrolyte sont attirés par la surface présentant une charge opposée formant ainsi une double couche électrochimique à l'interface de chaque électrode. L'énergie électrique est ainsi stockée de manière électrostatique par séparation des charges.

L'expression de la capacité de tels supercondensateurs est identique à celle de condensateurs électriques classiques, à savoir :

$$C = \varepsilon.S/e$$

avec :

$\varepsilon$ : la permittivité du milieu,
S : la surface occupée par la double couche, et
e : l'épaisseur de la double couche.

Les capacités atteignables au sein de supercondensateurs sont beaucoup plus importantes que celles communément atteintes par des condensateurs classiques, ceci du fait de l'utilisation d'électrodes poreuses à haute surface spécifique (maximisation de la surface) et de l'extrême étroitesse de la double couche électrochimique (quelques nanomètres).

D'autre part, l'énergie stockée au sein du condensateur est définie selon l'expression suivante :

$$E = 1/2.C.V^2,$$

dans laquelle V est le potentiel de la supercapacité.

La capacité et le potentiel sont deux paramètres essentiels qu'il est nécessaire d'optimiser pour favoriser les performances des supercondensateurs, le potentiel dépendant directement de la stabilité de l'électrolyte sous l'influence du champ électrique.

Ainsi, les électrodes utilisées doivent nécessairement être :

- conductrices, afin d'assurer le transport des charges électriques,
- poreuses, afin d'assurer le transport des charges ioniques et la formation de la double couche électrique sur une grande surface, et
- chimiquement inertes, pour éviter toutes réactions parasites consommatrices d'énergie.

Les systèmes de stockage d'énergie sont donc particulièrement intéressants pour les applications nécessitant des puissances importantes tout en véhiculant des énergies significatives. Les possibilités de charges et décharges rapides, la durée de vie accrue par rapport à une batterie, ainsi que la possibilité d'avoir des systèmes à base de produits non toxiques, font des supercondensateurs des candidats prometteurs pour nombre d'applications.

Les matériaux carbonés poreux, sous forme de poudre ou de monolithes, se révèlent les mieux adaptés pour de telles applications. Parmi les matériaux carbonés poreux décrits dans l'art antérieur, les aérogels de carbone présentent des caractéristiques intéressantes pour les applications supercapacitives, du fait de leur forte porosité (R. W. Pekala et al., J. Mater. Sci. 24 (1989) 3221 ; C. Lin et al., Carbon 35 (1997) 1271 ; B. Mathieu et al., Ann. Chim. Fr. 22 (1997) 19).

La surface spécifique des matériaux carbonés et la porosité réellement accessible par l'électrolyte sont des facteurs essentiels dans l'établissement et l'optimisation de la double couche électrochimique. La capacité résultante est communément exprimée par rapport à la masse sèche du matériau. On parle de capacité spécifique, exprimée en F/g de carbone sec. Ce mode de calcul n'est néanmoins pas satisfaisant dans la mesure où il n'est pas représentatif des performances du matériau lorsqu'il est employé en tant qu'électrode. Une meilleure adéquation entre l'évaluation numérique quantitative et la réalité des performances peut être obtenue par l'évaluation de la capacité massique pleine du matériau, qui tient compte du volume poreux de ce matériau. Une maximisation des performances des électrodes carbonées nécessite idéalement de parvenir à augmenter cette capacité qui est fonction de la surface accessible, tout en réduisant le volume poreux des matériaux. Ce volume est en effet occupé par l'électrolyte (qui alourdit le poids final des électrodes), ce qui abaisse la capacité massique pleine (exprimée en F/g de carbone rempli d'électrolyte). En considérant que les deux électrodes d'un même système ont la même capacité spécifique, on parle de capacité spécifique moyenne.

WO 2009/125094 décrit des matériaux carbonés résultant de la pyrolyse de type résorcinol-formaldéhyde-latex (RFL), ces derniers présentant une porosité ajustée. Toutefois, les capacités moyennes de ces matériaux peuvent encore être améliorées.

Différents traitements chimiques permettant d'augmenter les performances capacitives des matériaux carbonés ont ainsi été décrits dans la littérature. Il s'agit typiquement d'activation à l'aide de $CO_2$, $HNO_3$, $H_2O_2$ ou KOH (J. L. Figueiredo, Carbon 37 (1999) 1379). Dans la plupart des cas, ces traitements consistent à créer de la porosité supplémentaire en détruisant localement le carbone (C. Lin et al. Carbon 38 (2000) 849). L'inconvénient de cette approche est l'augmentation simultanément de la capacité et du volume poreux. L'augmentation de la capacité spécifique pleine (exprimée en F/g de carbone rempli d'électrolyte) n'est ainsi pas systématique puisque la masse du matériau augmente parallèlement à la capacité.

Le traitement d'activation engendre en outre une oxydation de la surface des carbones résultant en un greffage plus ou moins important de fonctions oxygénées présentant une activité rédox (B. E. Conway, Electrochemical Supercapacitors - Scientific Fundamentals and Technological Applications, pp. 186-190). Les phénomènes engendrés étant faradiques et surfaciques, ils sont rapides et assimilables à une contribution capacitive (on parle de pseudocapacité).

La présence de groupements fonctionnels à base d'oxygène peut également affecter la mouillabilité, voire la réactivité chimique et électrochimique à l'interface électrode/électrolyte, et ainsi favoriser l'établissement de la double couche électrochimique (C. T. Hsieh, Carbon 40 (2002) 667). Toutefois, la pseudocapacité de tels matériaux greffés reste encore à améliorer.

US 5,993,996 concerne des dispositifs pour le stockage d'énergie. Ce document décrit un procédé de traitement de matériaux carbonés poreux issus de résines phénoliques, ledit procédé comprenant une étape d'hydrogénation à une température comprise entre 650 et 900°C (il s'agit d'une étape de réduction destinée à supprimer les fonctions oxygénées à la surface du matériau carboné), suivie d'une étape de sulfonation réalisée à l'aide d'une solution d'acide sulfurique concentré à une température pouvant atteindre 290°C. Ce procédé reste néanmoins complexe dans la mesure où il comprend nécessairement une étape préalable d'hydrogénation.

D'autres documents de l'art antérieur proposent des procédés de greffage et de maximisation des teneurs en soufre au sein des matériaux carbonés poreux.

Baker *et al.* (W. S. Baker et al., J. Non-Cryst. Solids 350 (2004) 80-87) décrivent notamment la modification de surfaces carbonées en faisant réagir des gels résorcinol-formaldéhyde (RF) avec du 3-thiophènecarboxaldéhyde, ce dernier étant inséré au sein du réseau après gélification du système RF. Des groupements thiophène sont ainsi incorporés dans la structure du gel, et conduisent, après pyrolyse, à l'apparition de fonctionnalités soufrées résiduelles. Les inconvénients majeurs des matériaux en résultant sont leurs très faibles densités et capacités volumiques. D'autre part, ce procédé fait intervenir de nombreuses étapes et requiert un temps de réalisation très long (plusieurs jours).

Zhang *et al.* (B. Zhang et al., Electrochimica Acta 54 (2009) 3708-3713) décrit la préparation de matériaux carbonés soufrés obtenues par traitement thermique de mélanges de noir d'acétylène et de soufre. Cette technique permet l'obtention de matériaux carbonés graphitiques comprenant une quantité importante de soufre (36% en poids). Ces matériaux (en mélange avec un liant de type PTFE) sont utilisés comme cathodes dans des systèmes faradiques, i.e. des batteries Li-S. Dans de tels systèmes, la diffusion des espèces est lente (cinétique globale de l'électrode limitée), ce qui ne les rend pas adaptés pour des applications supercapacitives.

Valenzuela Calahorro *et al.* (C. Valenzuela Calahorro et al., Carbon Vol. 28, Nos. 2/3, pp. 321-335, 1990) décrivent l'introduction de soufre dans des matériaux carbonés activés en utilisant les agents gazeux $H_2S$ et $SO_2$, suivant différentes conditions de chauffage. Toutefois, les procédés industriels basés sur l'utilisation de tels gaz sont toxiques et restent complexes à mettre en oeuvre.

Lakshmi *et al.* (N. Lakshmi et al., J. Phys. D: Appl. Phys. 39 (2006) 2785-2790) décrivent des matériaux carbonés sous forme de poudre destinés à être utilisés dans des piles à combustible, les matériaux carbonés étant soumis à un traitement au sulfate d'ammonium à une température de 235°C, générant ainsi du trioxyde de soufre $SO_3$. Ce dernier réagit ensuite avec les hydrogènes situés à la surface des matériaux :

$$(NH_4)_2SO_4 \rightarrow 2NH_3 + H_2O + SO_3$$

$$\text{Carbone-H} + SO_3 \rightarrow \text{Carbone-}SO_3H$$

Les matériaux RF ou RFL traités par du sulfate d'ammonium $(NH_4)_2SO_4$ présentent néanmoins de très faibles capacités.

Toutefois, contrairement aux solutions de l'art antérieur, la présente invention propose un nouveau procédé permettant l'obtention de matériaux carbonés poreux monolithiques ayant des propriétés supercapacitives optimisées du fait de la présence d'un taux de soufre contrôlé à leur surface, ces matériaux étant obtenus par mise en contact avec un acide fort soufré, suivi d'une étape de traitement thermique spécifique.

L'un des objectif de la présente invention consiste à mettre au point un procédé de préparation d'un matériau carboné poreux modifié au soufre, les matériaux obtenus selon ce procédé présentant des performances énergétiques nettement, améliorées par rapport aux matériaux de l'art antérieur, et ce en optimisant la quantité de soufre présente au sein desdits matériaux. En effet, les inventeurs ont mis en évidence que le procédé de l'invention permettait de maximiser les performances énergétiques, et plus particulièrement la capacité et le rendement énergétique des matériaux en résultant.

En outre, une grande partie des matériaux carbonés de l'art antérieur présente une résistance mécanique limitée ne permettant pas leur usinage. Pour produire des électrodes à partir de tels matériaux il faut tout d'abord les réduire en une poudre qui est ensuite compressée en mélange avec un liant, le plus souvent un polymère fluoré. Le liant étant un matériau non conducteur, la capacité massique de telles électrodes est limitée et inférieure à celle du matériau carboné lui-même, s'il était sous forme d'un monolithe.

Les inventeurs ont donc cherché à mettre au point un matériau qui ait à la fois une densité, et donc une résistance mécanique, élevée, et également une capacité améliorée. L'invention concerne notamment un matériau carboné monolithique usinable.

Les inventeurs ont également cherché des produits et procédés qui soient économiques et dont la mise en oeuvre soit simple et applicable à l'échelle industrielle. En effet, contrairement à certains procédés de l'art antérieur, le procédé de l'invention présente l'avantage de ne pas nécessiter d'étape d'hydrogénation préalable.

Ainsi, l'invention a pour premier objet un procédé de préparation d'un matériau carboné poreux monolithique modifié au soufre comprenant un pourcentage atomique surfacique en soufre variant de 0,01 à 0,5%, et présentant une densité comprise entre 0,5 et 1,3, présentant des propriétés supercapacitives accrues, ledit procédé comprenant au moins les étapes suivantes :

(i) le séchage d'un gel comprenant au moins un polymère hydrophile de type polyhydroxybenzène/formaldéhyde,
(ii) la pyrolyse du matériau obtenu lors de l'étape (i),
(iii) l'imprégnation du matériau carboné monolithique issu de l'étape (ii) avec un acide fort soufré,
(iv) le traitement thermique à une température comprise entre 300 et 500°C, de préférence entre 350 et 500°C, et encore plus préférentiellement entre 300 et 400°C, du matériau modifié au soufre obtenu à l'issu de l'étape (iii),

ledit procédé ne comprenant pas d'étape d'hydrogénation.

On entend par gel, le mélange d'une matière colloïdale et d'un liquide, qui se forme spontanément ou sous l'action d'un catalyseur par la floculation et la coagulation d'une solution colloïdale.

Les polymères hydrophiles de type polyhydroxybenzène/formaldéhyde (RF) utilisés sont des polymères résultant de la polycondensation d'au moins un monomère du type polyhydroxybenzène et d'au moins un monomère formaldéhyde, cette réaction de polymérisation pouvant impliquer plus de deux monomères distincts, les monomères additionnels étant du type polyhydroxybenzène ou non.

Les polyhydroxybenzènes utilisés dans le cadre de la présente invention sont préférentiellement des di- ou des tri-hydroxybenzènes, et avantageusement le résorcinol (1,3-dihydroxybenzène) ou un mélange de résorcinol avec un autre composé choisi parmi le catéchol, l'hydroquinone, le phloroglucinol.

Le système polymère, de préférence un système résorcinol/formaldéhyde, peut en outre être mélangé à un latex.

Par latex, on entend une dispersion aqueuse d'un élastomère. Avantageusement, selon l'invention on utilise un latex de pH compris entre 3 et 7,5, avantageusement entre 5,5 et 7,5.

De façon préférentielle le latex est un latex azoté, c'est-à-dire un latex porteur de fonctions azotées telles que des fonctions nitrile, azo, amine, amide.

Le latex azoté de l'invention se caractérise de préférence par une quantité de monomères azotés représentant entre 0,1 et 95% en moles par rapport à l'ensemble des monomères du latex. Ces quantités sont évaluées sur la matière active, en excluant l'eau dans laquelle est dispersé le latex.

Selon l'invention, le latex peut être un mélange d'au moins deux latex, un latex azoté et un latex non azoté.

Avantageusement, le latex azoté représente de 5 à 100% en masse de la masse de latex.

Parmi les latex azotés pouvant être utilisés, on peut citer : les caoutchoucs nitriles, les copolymères d'acrylonitrile et de butadiène (NBR), les copolymères d'acrylonitrile et de butadiène hydrogénés (HNBR), les copolymères de styrène et d'acrylonitrile (SAN), les terpolymères d'acrylonitrile, de butadiène et de styrène (ABS), les terpolymères de styrène, d'acrylonitrile et de styrène (SAS), les élastomères de polyuréthane. Ces polymères peuvent être sous la forme de latex ou éventuellement de suspension de particules ou de fibres. Ils peuvent être partiellement pré-réticulés ou non et ils peuvent être sous la forme de micro-gels.

De tels produits sont disponibles commercialement sous les références suivantes : NIPOL®, LIPOLAN®, PERBUNAN-N®. Les produits NBR hydrogénés (HNBR), NBR carboxylés (XNBR) et les HXNBR sont fabriqués par les sociétés Polymer Latex, Lanxess, Sumitomo et Nippon Zeon.

Les latex de styrène acrylonitrile (SAN) sont décrits dans Colloid and Polymer Science (1975) vol. 253 pp. 538-54, les latex coeur-enveloppe SAN Butadiène Styrène sont décrits dans US 6,753,382.

Dans le gel de l'invention, le rapport molaire du polyhydroxybenzène, désigné R, et qui est de préférence le résorcinol, et du formaldéhyde, désigné F, est $0,4 \leq R/F \leq 0,6$, de préférence $0,45 \leq R/F \leq 0,55$. Avantageusement : $R/F \approx 0,5$.

Le rapport massique des particules de latex ($M_L$) à la somme de tous les constituants $M_L + M_R + M_F$, avec $M_R$ = masse de polyhydroxybenzène (de préférence le résorcinol), $M_F$ = masse de formaldéhyde, est compris dans les limites suivantes :

$$0,1 \leq \frac{M_L}{M_L + M_R + M_F} \leq 95\%,$$

de préférence ce rapport est compris entre 1 et 40%, plus préférentiellement entre 1 et 30%, et encore plus préférentiellement entre 2 et 15%, de façon à favoriser l'augmentation de densité du produit et donc sa résistance mécanique.

Dans ce calcul, la masse des particules du latex $M_L$ est évaluée hors solvant. On calcule la masse des particules de latex en déduisant la masse d'eau de la masse totale de la dispersion de latex.

L'étape (i) de séchage du gel comprenant au moins un polymère hydrophile de type polyhydroxybenzène/formaldéhyde est de préférence réalisée à volume constant, avantageusement sous pression, dans une étuve, à une température allant de 70 à 90°C, pendant une durée comprise entre 12 et 72 heures. A l'échelle industrielle, l'étape de séchage peut être réalisée sous atmosphère contrôlée.

Différents modes de séchage peuvent être envisagés : soit par échange de solvants puis séchage en milieu $CO_2$ supercritique, soit par séchage convectif sous flux gazeux ou en enceinte climatique à taux d'hygrométrie contrôlé, ou soit par lyophilisation.

De préférence, on choisit d'appliquer un séchage par échange de solvants puis séchage en milieu $CO_2$ supercritique, ou un séchage convectif en enceinte climatique à taux d'hygrométrie contrôlé, ces deux modes de séchage permettant l'obtention de produits sans déformation ni craquelures. Le séchage convectif est le plus préféré, dans la mesure où il s'agit du mode de séchage le moins coûteux.

Les gels séchés obtenus à l'issu de l'étape (i) sont ensuite pyrolysés, au cours d'une étape (ii).

L'étape (ii) est avantageusement réalisée sous atmosphère d'azote selon le protocole suivant :

- une montée lente en température, de préférence à une vitesse comprise entre 1 et 5°C/min, jusqu'à une température de 400-500°C, cette température pouvant être maintenue pendant une durée approximative d'une heure, cette montée en température permettant l'amélioration de la tenue mécanique du matériau, suivie de
- une montée en température plus rapide, de préférence à une vitesse comprise entre 5 et 20°C/min, jusqu'à une température de 800°C-1500°C, cette température pouvant être maintenue pendant une durée approximative de deux heures.

Il résulte de l'étape (ii) du procédé de l'invention une carbonisation de tous les composants présents dans le matériau, ce dernier subissant une réduction de volume. Le matériau se présente sous la forme d'un monolithe de résistance mécanique élevée, ce qui permet son usinage. Toutefois, selon une variante de l'invention, ledit matériau carboné peut, si on le souhaite, être réduit en poudre.

L'étape (iii) du procédé de l'invention est une étape de post-traitement consistant à mettre en contact le matériau carboné obtenu lors de l'étape (ii) avec un acide fort soufré.

On entend par acide fort soufré un acide à base de soufre ayant un pH < 1. Selon un mode de réalisation avantageux, l'acide fort soufré se présente sous forme de solution. Il peut être choisi parmi l'acide sulfurique, l'oléum, l'acide chlorosulfonique et l'acide fluorosulfonique, l'acide fort soufré le plus préféré étant l'acide sulfurique. L'acide fort soufré utilisé est préférentiellement mis en oeuvre sous forme de solution à une concentration comprise entre 0,5M et la saturation, et de préférence entre 1M et la saturation.

Selon un mode de réalisation préféré, l'étape (iii) est réalisée par immersion dans une solution d'acide fort soufré pendant une durée comprise entre 1 heure et 24 heures.

Le matériau obtenu à l'issu de l'étape (iii) du procédé de l'invention est ensuite soumis à une étape (iv) de traitement thermique, ledit traitement thermique étant de préférence réalisée sous un flux d'azote (débit allant de 0,1 à 1 L.min$^{-1}$), à une vitesse comprise entre 1 et 20°C/min, jusqu'à un plateau pouvant varier de 300 à 500°C, et de préférence de 300 à 400°C, pendant une durée pouvant être comprise entre 1 minute et 12 heures, et de préférence inférieure ou égale à 2 heures. La diffusion des gaz issus de la décomposition de l'acide fort soufré au sein du matériau peut ainsi être contrôlée, en faisant varier la vitesse, la température et/ou la durée du traitement thermique.

Lors du traitement thermique, l'acide sulfurique se décompose en anhydride sulfurique (la réaction est pratiquement complète à 450°C). Selon les fonctions présentes à la surface du matériau carboné, les réactions suivantes peuvent notamment avoir lieu :

$$\text{Carbone-H} + SO_3 \rightarrow \text{Carbone-}SO_3H \text{ (sulfonation)}$$

$$R\text{-}OH + H_2SO_4 \rightarrow R\text{-}O\text{-}SO_3H + H_2O$$

L'anhydride sulfurique libéré est ainsi diffusé dans l'ensemble des pores du matériau.

Un autre objet de l'invention est un matériau carboné poreux modifié au soufre susceptible d'être obtenu selon le procédé de l'invention, ledit matériau comprenant un pourcentage atomique surfacique en soufre variant de 0,01 à 0,5%, et présentant une densité allant de 0,5 à 1,3, et de préférence de 0,7 à 1,3. Avantageusement, le pourcentage atomique surfacique en soufre varie de 0,1 à 0,5%, et la densité de 0,75 à 1,1. L'optimisation de ces caractéristiques, et notamment de la densité, est essentielle pour permettre le stockage d'énergie dans le plus petit volume possible, et ainsi répondre à des contraintes volumiques, tout en ayant une tenue mécanique satisfaisante.

Le matériau carboné de l'invention se caractérise en outre par un volume poreux (mesuré par la méthode BET ou imprégnation sèche) pouvant varier de 0,4 à 1 cm$^3$.g$^{-1}$, et encore plus préférentiellement de 0,4 à 0,75 cm$^3$.g$^{-1}$.

Le matériau carboné de l'invention est un monolithe de carbone. Par monolithe de carbone, on entend un matériau d'un seul bloc constitué essentiellement d'atomes de carbone. Le matériau carboné de l'invention peut néanmoins présenter une concentration surfacique en atomes d'oxygène allant de 16 à 23%, et en atomes d'azote allant de 0 à 1%.

Les matériaux poreux sont caractérisés par la taille des pores qu'ils comprennent.

Les matériaux dont les diamètres des pores sont inférieurs à 2 nm sont dits microporeux. Ceux dont les diamètres des pores sont compris entre 2 et 50 nm sont dits mésoporeux. Enfin, les matériaux dont les pores ont un diamètre supérieur à 50 nm sont qualifiés de macroporeux.

De manière avantageuse, le matériau carboné de l'invention présente un réseau de pores dont au moins 10% est mésoporeux (dont la taille des pores a un diamètre compris entre 2 et 50 nm), et préférentiellement plus de 20%.

Selon un mode de réalisation avantageux, le matériau carboné de l'invention présente une surface spécifique mesurée selon la méthode BET supérieure ou égale à 500 2 -1 m$^2$.g$^{-1}$.

Le matériau de l'invention se caractérise également par une capacité massique moyenne pleine (remplie d'électrolyte) de préférence supérieure ou égale à 140 F/g mesurée dans une solution aqueuse molaire de H$_2$SO$_4$ 1M ou supérieure ou égale à 120 F/g mesurée dans une solution aqueuse de KOH 6M.

La capacité massique moyenne pleine est la capacité massique moyenne du matériau mesurée sur le matériau rempli d'électrolyte. Elle est mesurée après immersion du matériau dans une solution d'électrolyte. Elle varie en fonction de l'électrolyte utilisé, et en particulier elle est fonction de la densité de l'électrolyte.

L'utilisation d'un matériau carboné poreux monolithique modifié au soufre tel que défini selon l'invention, pour produire des électrodes destinées à des systèmes de stockage d'énergie supercacitifs, fait également partie de l'invention.

Enfin, l'invention concerne également des électrodes constituées d'un matériau carboné poreux modifié au soufre selon l'invention pour des batteries au lithium comprenant au moins une électrode selon l'invention.

Les électrodes de l'invention peuvent également être préparées en réduisant les matériaux de l'invention en une poudre, puis en les compressant en mélange avec un liant, le plus souvent un polymère fluoré. Cette étape supplémentaire peut être réalisée avant ou après l'étape (iii) de post-traitement du matériau carboné avec un acide fort soufré.

Outre les dispositions qui précèdent, l'invention comprend encore d'autres dispositions qui ressortiront du complément de description qui suit, qui se rapporte à des exemples mettant en évidence les propriétés avantageuses des matériaux carbonés obtenus selon le procédé de l'invention, ainsi qu'aux figures annexées dans lesquelles :

- la Figure 1 représente l'analyse XPS d'un matériau carboné poreux modifié au soufre répondant à la définition de l'invention (matériau carboné de l'Exemple 1),

- la Figure 2 représente des chronopotentiogrammes obtenus respectivement pour un matériau carboné préparé selon le procédé de l'invention et pour un matériau carboné obtenu selon un procédé représentatif de l'art antérieur,
- la Figure 3 représente le rendement énergétique en fonction du taux de soufre greffé à la surface des matériaux carbonés, après un post-traitement au soufre (matériaux carbonés de l'Exemple 2).

**PARTIE EXPERIMENTALE :**

**Exemple 1 :**

I- Protocole de synthèse

Les gels sont issus de la polycondensation du résorcinol avec le formaldéhyde, en présence de particules de latex, un élastomère NBR.

Les rapports molaires résorcinol/formaldéhyde (R/F) et résorcinol/catalyseur (R/C), et le rapport massique résorcinol/eau (R/W), ont été fixés respectivement à 0,5, 600 et 0,4.

Le formaldéhyde employé est sous forme d'une solution aqueuse (stabilisée en présence de 10 à 15% de méthanol), la quantité d'eau qu'il contient est prise en compte dans le volume total d'eau présente dans la formulation, et donc dans le rapport R/W

Le résorcinol (10,204 g, fourni par la société Acros, qualité 98%) est d'abord dissous dans l'eau distillée. On ajoute ensuite la solution aqueuse de formaldéhyde (Riedel de Haën, en solution à 36,5%) : 14,944 g.

La teneur en particules de latex (Latex Perbunan® RN-2890) ajoutées au système est définie selon le rapport :

$$\frac{M_L}{M_L + M_R + M_F}$$

Cette masse calculée représente la masse de particules de latex, et non la masse globale de solution de latex. La teneur en latex présente dans le gel est de 5%.

Le mélange final est versé au sein d'enceintes hermétiques, lesquelles sont placées à l'étuve à 90°C pendant 1 journée. Les gels obtenus sont lavés en les immergeant dans de l'eau distillée pendant 2 heures, de manière à supprimer les traces de réactifs encore présents.

Les gels sont ensuite placés dans une enceinte climatique à 85°C présentant un taux d'hygrométrie de 85%.

Les gels séchés sont ensuite pyrolysés sous un flux d'azote de 0,15 L.min$^{-1}$ suivant le protocole suivant :

- une montée en température à 5°C/min jusqu'à une température de 400°C, cette température étant maintenue pendant une durée d'une heure, puis
- une montée en température à 5°C/min jusqu'à une température de 800°C, cette température étant maintenue pendant une durée de deux heures,

les gels étant ensuite ramenés à température ambiante.

Le matériau carboné ainsi obtenu est placé dans une solution d'acide sulfurique à 18M, soumis à un traitement aux ultrasons pendant une durée de 15 minutes (ceci afin d'accélérer le remplissage des pores du matériau), puis laissé en immersion dans la solution d'acide sulfurique pendant une durée de 12 heures, ceci afin d'optimiser le remplissage des pores par la solution d'acide sulfurique.

Le matériau carboné imbibé d'acide est ensuite placé dans un four, sous flux d'azote de 0,15 L.min$^{-1}$, soumis à une montée en température de 5°C/min jusqu'à un plateau de 350°C, puis maintenu à cette température pendant une durée d'une heure.

II- Analyse XPS

L'analyse XPS est réalisée grâce à un instrument PHI Quantera SXM ayant une source monochromatique A1 Kα. La profondeur d'analyse par les photons X est inférieure à 10 nm (environ 3 nm), et l'angle de détection est à 45° par rapport à l'échantillon.

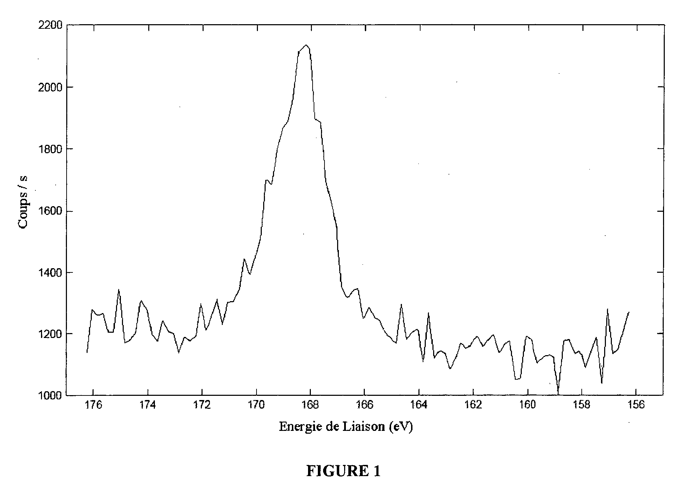

Cette analyse montre un pic centré vers 169 eV, caractéristique du soufre sous forme oxydée. La Figure 1 représente la zone du spectre en énergie de liaison où le pic caractéristique peut être observé. L'analyse quantitative indique un taux de soufre de 0,45%.

III- <u>Mesures du volume poreux et de la surface BET</u>

Les propriétés texturales des matériaux carbonés (surface spécifique et volume poreux) ont été analysées par manométrie d'adsorption d'azote à 77K sur un appareil Micromeritics ASAP 2010. La surface spécifique des matériaux carbonés est déduite de l'isotherme d'adsorption en utilisant la méthode BET (S. Brunauer et al., J. Am. Chem. Soc., 60 (1938) 309). Le volume poreux total est déterminé directement sur l'isotherme en convertissant la valeur du volume adsorbé à $P/P^0 = 0,95$.

Les valeurs obtenues sont les suivantes :

- Surface spécifique : $S_{spé} = 675 \pm 50$ M$^2$.g$^{-1}$,
- Volume poreux : $V_{tot} = 0,54 \pm 0,06$ cm$^3$.g$^{-1}$.

IV- <u>Mesures des capacités et des densités d'énergie</u>

Les capacités des matériaux carbonés poreux modifiés au soufre ont été caractérisées au sein d'un dispositif électrochimique à trois électrodes, à l'aide d'un potentiostat VMP3 (Biologic) commandé par le logiciel EC-lab. Les matériaux carbonés ont notamment été caractérisés par chronopotentiométrie en utilisant des densités de courant allant de 0,125 à 0,5 A/g d'électrode.

L'électrode de travail et la contre-électrode sont constituées d'une plaque de carbone monolithique (de masse et de surface connue) mise en contact avec une grille de platine jouant le rôle de collecteur. Le système est parfaitement symétrique. L'électrode de référence est mise en court-circuit avec la contre-électrode.

Les capacités ont été mesurées dans deux électrolytes aqueux différents : une solution d'acide sulfurique $H_2SO_4$ à 1M et une solution d'hydroxyde de potassium KOH à 6M, ces électrolytes étant des électrolytes aqueux de référence dans les domaines d'application visés.

La capacité globale des systèmes a été mesurée en farads (F) à partir des courbes de charge-décharge, en utilisant l'équation suivante :

$$C = It/(V_1 - V_2).$$

La capacité spécifique moyenne des matériaux carbonés est déduite de la capacité globale des deux électrodes en série, rapportée à la masse d'un matériau carboné rempli d'électrolyte.

Les densités d'énergie ont été mesurées conformément au protocole décrit dans J. R. Miller et A. F. Burke « Electric vehicle capacitor test procedure manual » 1994 DOE/ID10491, pp. 21-25.

V- <u>Résultats</u>

Des mesures ont également été réalisées sur des matériaux carbonés poreux non modifiés au soufre, lesdits matériaux ayant été préparés selon le protocole décrit ci-dessus, mais sans post-traitement au soufre, ni traitement thermique ultérieur (procédé ne comprenant ni l'étape (iii), ni l'étape (iv)).

Des chronopotentiogrammes ont été réalisés lors d'une caractérisation en mode galvanostatique en soumettant l'échantillon à un courant et en observant la réponse en potentiel. Les matériaux carbonés ont pour cela été soumis à des cycles de charges-décharges à 0,25 A/g en montage à deux électrodes.

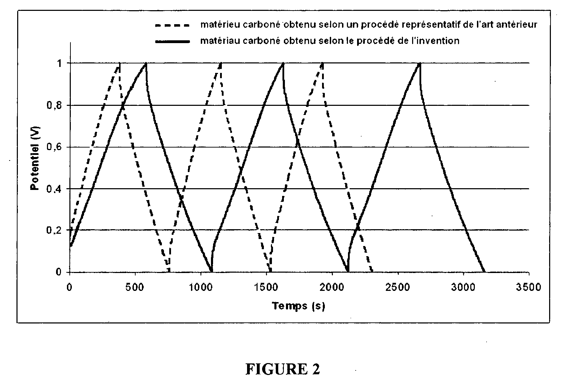

Les chronopotentiogrammes obtenus sur système symétrique (électrolyte $H_2SO_4$ 1M) pour un matériau carboné préparé selon un procédé de l'art antérieur, et pour un matériau carboné préparé selon le procédé de l'invention, mettent en évidence un gain de capacité de 50% pour le matériau obtenu selon le procédé de l'invention (voir la Figure 2).

Les résultats sont résumés dans le tableau 1 ci-après :

**Tableau 1**

| Echantillons | Représentatif de l'art antérieur | Selon le procédé de l'invention |
|---|---|---|
| Capacité moyenne (en F/g de carbone rempli de $H_2SO_4$ 1M) ($\pm$ 5 F/g) | 75 | 140 |
| Densité d'énergie du système symétrique en charge sous 1,1 V (en Wh/kg de carbone rempli de $H_2SO_4$ 1M) | 2,95 | 6,0 |

(suite)

| Echantillons | Représentatif de l'art antérieur | Selon le procédé de l'invention |
|---|---|---|
| Capacité moyenne (en F/g de carbone rempli de KOH 6M) ($\pm$ 5 F/g) | 63 | 120 |
| Densité d'énergie du système symétrique en charge sous 1,1 V (en Wh/kg de carbone rempli de KOH 6M) | 2,6 | 5,1 |

**Exemple 2 : Contre-exemple**

I- Protocole de synthèse

Des matériaux carbonés monolithiques sont préparés en utilisant des quantités identiques à celles utilisées dans l'Exemple 1, et en appliquant différentes conditions de traitement.
Deux matériaux carbonés C1 et C2 ont ainsi été préparés.
Le matériau C1 est d'abord soumis à une étape d'hydrogénation (montée en température de 1°C/min jusqu'à 730°C, puis maintien de cette température pendant 5 heures).
Les matériaux sont ensuite placés dans une solution d'acide sulfurique pur, soumis à un traitement aux ultrasons pendant une durée de 15 minutes (ceci afin d'optimiser le remplissage des pores par la solution d'acide sulfurique), puis laissé en immersion dans la solution d'acide sulfurique pendant une durée de 12 heures.
Chaque matériau carboné imbibé d'acide est ensuite placé dans un four, sous flux d'azote, puis soumis à une montée en température de 5°C/min jusqu'à un plateau de 125°C, puis maintenu à cette température pendant une durée de 24 heures.

II- Mesures du taux de soufre

Les taux de soufre ont été déterminés par analyse XPS, comme décrit dans l'Exemple 1.
Les résultats sont récapitulés dans le tableau 2 ci-après et comparés aux performances du matériau carboné préparé selon le procédé de l'invention (cf. Exemple 1).

III- Mesures de la surface spécifique et du volume poreux

La surface spécifique et le volume poreux ont été déterminés selon le même protocole que celui décrit dans l'Exemple 1.
Les échantillons présentent les surfaces spécifiques et volumes poreux suivants :

- Surface spécifique : $S_{spé}$ = 675 $\pm$ 50 $M^2.g^{-1}$,
- Volume poreux : $V_{tot}$ = 0,54 $\pm$ 0,06 $cm^3.g^{-1}$.

IV- Résultats

Les taux de soufre, les capacités pleines et les densités d'énergie obtenues pour les matériaux carbonés C1, C2 et C3 sont récapitulés dans le tableau 2 suivant :

**Tableau 2**

| Echantillons | Matériau C1 | Matériau C2 | Matériau carboné de l'Exemple 1 |
|---|---|---|---|
| Conditions de traitement | Hydrogénation à 730°C, puis traitement avec une solution de $H_2SO_4$ à 125°C pendant 24 heures | Traitement avec une solution de $H_2SO_4$ à 125°C pendant 24 heures | Traitement avec une solution de $H_2SO_4$ à 350°C pendant 1 heure |
| % atomique de soufre | 1,0 | 0,55 | 0,45 |

(suite)

| Echantillons | Matériau C1 | Matériau C2 | Matériau carboné de l'Exemple 1 |
|---|---|---|---|
| Capacité moyenne (en F/g de carbone rempli de $H_2SO_4$ 1M) ($\pm$ 5 F/g) | 135 | 120 | 140 |
| Densité d'énergie du système symétrique en charge sous 1,1 V (en Wh/kg de carbone rempli de $H_2SO_4$ 1M) | 5,6 | 5,0 | 6,0 |

La comparaison des capacités des matériaux carbonés C1 et C2 montre qu'avec un traitement thermique à 125°C, une étape préalable d'hydrogénation est nécessaire pour maximiser les performances capacitives. Par contre, les capacités moyennes mesurées restent inférieures à celles des matériaux carbonés préparés selon le procédé de l'invention.

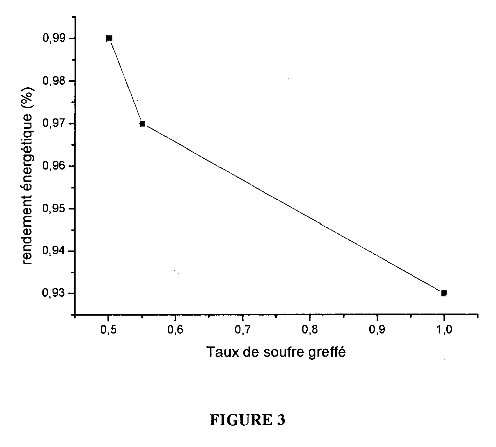

La Figure 3 montre les rendements énergétiques des matériaux carbonés précédents (C1, C2 et matériau carboné de l'Exemple 1) en fonction de leur taux de soufre greffé. On observe qu'une maximisation du taux de soufre à la surface des matériaux carbonés (> 0,5%) ne conduit pas nécessairement à une augmentation des performances puisque le rendement énergétique diminue. Des phénomènes d'autodécharge plus importants apparaissent lorsque le taux de soufre augmente (> 0,5%) : des fonctions soufrées réagissent spontanément en présence d'électrolyte (réactions redox parasites), limitant ainsi le rendement énergétique.

**Exemple 3 :**

I- Protocole de synthèse

Deux matériaux carbonés monolithiques sont préparés selon le protocole de l'Exemple 1, en modifiant la nature de l'acide fort soufré et la température de traitement thermique : l'acide sulfurique et le traitement thermique à 350°C (pendant une heure) sont remplacés par une solution saturée de $(NH_4)_2SO_4$ et un traitement thermique à 235°C (pendant 30 minutes) (conditions décrites dans N. Lakshmi et al., J. Phys. D: Appl. Phys. 39 (2006) 2785-2790).

II- Mesures de la surface spécifique et du volume poreux

La surface spécifique et le volume poreux ont été déterminés selon le même protocole que celui décrit dans l'Exemple 1.

Les échantillons présentent les surfaces spécifiques et volumes poreux suivants :

- Surface spécifique : $S_{spé}$ = 675 $\pm$ 50 $M^2.g^{-1}$,
- Volume poreux : $V_{tot}$ = 0,54 $\pm$ 0,06 $cm^3.g^{-1}$.

III- Résultats

Les résultats sont résumés dans le tableau 3 ci-dessous :

**Tableau 3**

| Echantillons | Matériau représentatif de l'art antérieur | Matériau carboné de l'Exemple 1 |
|---|---|---|
| Conditions de traitement | $(NH_4)_2SO_4$ saturé, 235°C, 30 min | Selon le procédé de l'invention |
| % atomique de soufre | 4 | 0,45 |
| Capacité moyenne (en F/g de carbone rempli de $H_2SO_4$ 1M) ($\pm$ 5 F/g) | 80 | 140 |

Ces résultats démontrent qu'une augmentation de la teneur en soufre n'implique pas nécessairement un gain de capacité. Au contraire, il semble que la nature des fonctions soufrées greffées joue également un rôle sur l'amélioration des performances capacitives. Il apparaît en outre que la nature du précurseur soufré est déterminante dans l'efficacité du traitement, l'utilisation d'une solution d'acide fort soufré ayant un pH < 1 étant préconisée pour améliorer les performances capacitives des matériaux carbonés.

**Revendications**

1. Procédé de préparation d'un matériau carboné poreux monolithique modifié au soufre comprenant un pourcentage atomique surfacique en soufre variant de 0,01 à 0,5%, et présentant une densité comprise entre 0,5 et 1,3, **caractérisé en ce qu'**il comprend au moins les étapes suivantes :

   (i) le séchage d'un gel comprenant au moins un polymère hydrophile de type polyhydroxybenzène/formaldéhyde,
   (ii) la pyrolyse du matériau obtenu lors de l'étape (i),
   (iii) l'imprégnation du matériau issu de l'étape (ii) avec un acide fort soufré,
   (iv) le traitement thermique à une température comprise entre 300 et 500°C, de préférence entre 350 et 500°C, et encore plus préférentiellement entre 300 et 400°C, du matériau modifié au soufre obtenu à l'issu de l'étape (iii),

   ledit procédé ne comprenant pas d'étape d'hydrogénation.

2. Procédé selon la revendication 1, **caractérisé en ce que** ledit gel comprend en outre au moins un latex.

3. Procédé selon la revendication 2, **caractérisé en ce que** ledit latex est un latex azoté, de préférence choisi parmi les caoutchoucs nitriles.

4. Procédé selon l'une des revendications 1 à 3, **caractérisé en ce que** l'étape (i) de séchage est réalisée soit par échange de solvants puis séchage en milieu $CO_2$ supercritique, soit par séchage convectif sous flux gazeux ou en enceinte climatique à taux d'hygrométrie contrôlé, ou soit par lyophilisation.

5. Procédé selon l'une des revendications 1 à 4, **caractérisé en ce que** l'étape (ii) de pyrolyse est réalisée sous atmosphère d'azote selon le protocole suivant :

   - une montée lente en température à une vitesse comprise entre 1 et 5°C/min jusqu'à une température de 400-500°C, cette température pouvant être maintenue pendant une durée approximative d'une heure, suivie de
   - une montée en température plus rapide, à une vitesse comprise entre 5 et 20°C/min, jusqu'à une température de 800-1500°C, cette température pouvant être maintenue pendant une durée approximative de deux heures.

6. Procédé selon l'une des revendications 1 à 5, **caractérisé en ce que** l'acide fort soufré est un acide à base de soufre se présentant sous la forme d'une solution de pH<1.

7. Procédé selon l'une des revendications 1 à 6, **caractérisé en ce que** l'acide fort soufré est choisi parmi l'acide sulfurique, l'oléum, l'acide chlorosulfonique et l'acide fluorosulfonique.

8. Procédé selon l'une des revendications 1 à 7, caractérisé en ce ledit acide fort soufré est une solution d'acide sulfurique ayant une concentration comprise entre 0,5M et la saturation, et de préférence entre 1M et la saturation.

9. Procédé selon l'une des revendications 1 à 8, **caractérisé en ce que** l'étape (iv) de traitement thermique est réalisée pendant une durée comprise entre 1 minute et 12 heures, et de préférence inférieure ou égale à 2 heures.

10. Matériau carboné poreux monolithique modifié au soufre susceptible d'être obtenu selon le procédé des revendications 1 à 9, **caractérisé en ce qu'**il comprend un pourcentage atomique surfacique en soufre variant de 0,01 à 0,5%, et présentant une densité comprise entre 0,5 et 1,3.

11. Matériau selon la revendication 10, **caractérisé en ce qu'**il comprend un pourcentage atomique surfacique en soufre variant de 0,1 à 0,5%, et une densité comprise entre 0,75 et 1,1.

12. Matériau selon la revendication 10 ou la revendication 11, **caractérisé en ce qu'**il présente un volume poreux variant de 0,4 à 1 $cm^3.g^{-1}$, et de préférence de 0,4 à 0,75 $cm^3.g^{-1}$.

**13.** Matériau selon l'une des revendications 10 à 12, **caractérisé en ce qu'**au moins 10% de ses pores ont un diamètre compris entre 2 et 50 nm.

**14.** Matériau selon l'une des revendications 10 à 13, **caractérisé en ce qu'**il présente une surface spécifique supérieure ou égale à 500 $m^2.g^{-1}$.

**15.** Matériau selon l'une des revendications 10 à 14, **caractérisé en ce qu'**il présente une capacité massique moyenne pleine supérieure ou égale à 140 F/g mesurée dans une solution aqueuse de $H_2SO_4$ 1M ou supérieure ou égale à 120 F/g mesurée dans une solution aqueuse de KOH 6M.

**16.** Utilisation d'un matériau carboné poreux monolithique modifié au soufre selon l'une des revendications 10 à 15, pour produire des électrodes destinées à des systèmes de stockage d'énergie supercapacitifs.

**17.** Electrode **caractérisée en ce qu'**elle est constituée d'un matériau carboné poreux monolithique modifié au soufre tel que défini selon l'une des revendications 10 à 15.

**18.** Supercondensateur **caractérisé en ce qu'**il comprend au moins une électrode selon la revendication 17.

**19.** Batterie au lithium **caractérisée en ce qu'**elle comprend au moins une électrode selon la revendication 17.

**Patentansprüche**

**1.** Verfahren zum Herstellen eines monolithischen Materials aus porösem Kohlenstoff, das mit Schwefel modifiziert ist, einen Oberflächenanteil an Schwefel im Bereich von 0,01 bis 0,5 Atom-% enthält und eine Dichte von zwischen 0,5 und 1,3 aufweist, **dadurch gekennzeichnet, dass** das Verfahren zumindest die nachfolgenden Schritte umfasst:

(i) Trocknen eines Gels, das zumindest ein hydrophiles Polymer vom Typ Polyhydroxybenzol/Formaldehyd umfasst,
(ii) Pyrolysieren des aus Schritt (i) gewonnenen Materials,
(iii) Durchtränken des aus Schritt (ii) hervorgegangenen Materials mit einer starken schwefelhaltigen Säure,
(iv) Wärmebehandeln des aus Schritt (iii) gewonnenen, schwefelmodifizierten Materials bei einer Temperatur von zwischen 300 und 500 °C, vorzugsweise zwischen 350 und 500 °C, und besonders bevorzugt zwischen 300 und 400 °C,

wobei das Verfahren keinen Schritt der Hydrierung umfasst.

**2.** Verfahren nach Anspruch 1, **dadurch gekennzeichnet, dass** das Gel ferner zumindest einen Latex enthält.

**3.** Verfahren nach Anspruch 2, **dadurch gekennzeichnet, dass** der Latex ein stickstoffhaltiger Latex, vorzugsweise ausgewählt aus Nitrilkautschuken, ist.

**4.** Verfahren nach einem der Ansprüche 1 bis 3, **dadurch gekennzeichnet, dass** der Trocknungsschritt (i) entweder durch Lösungsmittelaustausch, gefolgt von einer Trocknung in superkritischem $CO_2$-Milieu, oder durch konvektive Trocknung unter einem Gasstrom oder im klimatisierten Raum mit kontrollierter Luftfeuchte oder durch Gefriertrocknung durchgeführt wird.

**5.** Verfahren nach einem der Ansprüche 1 bis 4, **dadurch gekennzeichnet, dass** der Pyrolyse-Schritt (ii) in einer Stickstoffatmosphäre gemäß dem nachfolgenden Ablauf erfolgt:

- langsamer Temperaturanstieg mit einer Rate zwischen 1 und 5 °C/min bis auf eine Temperatur von 400 - 500 °C, wobei diese Temperatur für eine Zeitdauer von etwa einer Stunde gehalten werden kann, dann
- schnellerer Temperaturanstieg mit einer Rate zwischen 5 und 20 °C/min bis auf eine Temperatur von 800 - 1500 °C, wobei diese Temperatur für eine Zeitdauer von etwa zwei Stunden gehalten werden kann.

**6.** Verfahren nach einem der Ansprüche 1 bis 5, **dadurch gekennzeichnet, dass** die starke schwefelhaltige Säure eine Säure auf Basis von Schwefel ist, die in Form einer Lösung mit pH < 1 vorliegt.

**7.** Verfahren nach einem der Ansprüche 1 bis 6, **dadurch gekennzeichnet, dass** die starke schwefelhaltige Säure ausgewählt ist aus Schwefelsäure, Oleum, Chlorsulfonsäure und Fluorsulfonsäure.

**8.** Verfahren nach einem der Ansprüche 1 bis 7, **dadurch gekennzeichnet, dass** die starke schwefelhaltige Säure eine Schwefelsäurelösung mit einer Konzentration zwischen 0,5 M und Sättigung, vorzugsweise zwischen 1 M und Sättigung, ist.

**9.** Verfahren nach einem der Ansprüche 1 bis 8, **dadurch gekennzeichnet, dass** der Schritt (iv) der Wärmebehandlung während einer Zeitdauer zwischen 1 Minute und 12 Stunden, vorzugsweise höchstens 2 Stunden lang, durchgeführt wird.

**10.** Monolithisches Material aus porösem Kohlenstoff, das mit Schwefel modifiziert und durch ein Verfahren nach den Ansprüchen 1 bis 9 erhältlich ist, **dadurch gekennzeichnet, dass** das Material einen Oberflächenanteil an Schwefel im Bereich von 0,01 bis 0,5 Atom-% und eine Dichte von zwischen 0,5 und 1,3 aufweist.

**11.** Material nach Anspruch 10, **dadurch gekennzeichnet, dass** es einen Oberflächenanteil an Schwefel im Bereich von 0,1 bis 0,5 Atom-% und eine Dichte von zwischen 0,75 und 1,1 aufweist.

**12.** Material nach Anspruch 10 oder 11, **dadurch gekennzeichnet, dass** das Material ein Porenvolumen im Bereich von 0,4 bis 1 cm$^3$.g$^{-1}$, vorzugsweise 0,4 bis 0,75 cm$^3$.g$^{-1}$, aufweist.

**13.** Material nach einem der Ansprüche 10 bis 12, **dadurch gekennzeichnet, dass** zumindest 10 % seiner Poren einen Durchmesser von zwischen 2 und 50 nm aufweisen.

**14.** Material nach einem der Ansprüche 10 bis 13, **dadurch gekennzeichnet, dass** das Material eine spezifische Oberfläche von mindestens 500 m$^2$.g$^{-1}$ aufweist.

**15.** Material nach einem der Ansprüche 10 bis 14, **dadurch gekennzeichnet, dass** das Material eine mittlere spezifische Kapazität von größer oder gleich 140 F/g, gemessen in einer wässrigen 1M H$_2$SO$_4$-Lösung, oder größer oder gleich 120 F/g, gemessen in einer wässrigen 6M KOH-Lösung, aufweist.

**16.** Verwendung eines mit Schwefel modifizierten monolithischen Materials aus porösem Kohlenstoff gemäß einem der Ansprüche 10 bis 15 zur Herstellung von Elektroden, die für superkapazitive Systeme zum Speichern von Energie bestimmt sind.

**17.** Elektrode, **dadurch gekennzeichnet, dass** die Elektrode aus einem mit Schwefel modifizierten monolithischen Material aus porösem Kohlenstoff gebildet ist, wie nach einem der Ansprüche 10 bis 15 definiert.

**18.** Superkondensator, **dadurch gekennzeichnet, dass** der Superkondensator zumindest eine Elektrode nach Anspruch 17 aufweist.

**19.** Lithiumbatterie, **dadurch gekennzeichnet, dass** die Lithiumbatterie zumindest eine Elektrode nach Anspruch 17 aufweist.

**Claims**

**1.** Process for preparing a sulphur-modified monolithic porous carbonaceous material, comprising a surface atomic percentage of sulphur varying from 0.01 to 0.5%, and having a density of between 0.5 and 1.3, **characterised in that** it comprises at least the following steps:

(i) drying a gel comprising at least one hydrophilic polymer of the polyhydroxybenzene/formaldehyde type,
(ii) pyrolysing the material obtained in step (i),
(iii) impregnating the material obtained in step (ii) with a strong sulphurous acid,
(iv) heat-treating the sulphur-modified material obtained at the end of step (iii), at a temperature between 300 and 500°C, preferably between 350 and 500°C, and still more preferably between 300 and 400°C,

said process not including a hydrogenation step.

**2.** Process according to claim 1, **characterised in that** the gel further comprises at least one latex.

**3.** Process according to claim 2, **characterised in that** said latex is a nitrogenous latex, preferably selected from among the nitrile rubbers.

**4.** Process according to one of claims 1 to 3, **characterised in that** the drying step (i) is carried out either by exchange of solvents followed by drying in a supercritical $CO_2$ medium, or by convective drying under a gas stream or in a climatic chamber with a controlled hygrometry rate, or by lyophilisation.

**5.** Process according to one of claims 1 to 4, **characterised in that** the pyrolysis step (ii) is carried out under a nitrogen atmosphere according to the following procedure:

- a slow rise in temperature at a rate of between 1 and 5°C/min up to a temperature of 400-500°C, this temperature optionally being maintained for a period of approximately one hour, followed by
- a more rapid rise in temperature, at a rate of between 5 and 20°C/min, up to a temperature of 800-1500°C, this temperature optionally being maintained for a period of approximately two hours.

**6.** Process according to one of claims 1 to 5, **characterised in that** the strong sulphurous acid is a sulphur-based acid in the form of a solution of pH < 1.

**7.** Process according to one of claims 1 to 6, **characterised in that** the strong sulphurous acid is selected from among sulphuric acid, fuming sulphuric acid, chlorosulphonic acid and fluorosulphonic acid.

**8.** Process according to one of claims 1 to 7, **characterised in that** said strong sulphurous acid is a sulphuric acid solution having a concentration between 0.5 M and saturation, preferably between 1 M and saturation.

**9.** Process according to one of claims 1 to 8, **characterised in that** the heat treatment step (iv) is carried out over a period of between 1 minute and 12 hours, and preferably less than or equal to 2 hours.

**10.** Sulphur-modified monolithic porous carbonaceous material which may be obtained by the process according to claims 1 to 9, **characterised in that** it comprises a surface atomic percentage of sulphur varying from 0.01 to 0.5%, and having a density of between 0.5 and 1.3.

**11.** Material according to claim 10, **characterised in that** it comprises a surface atomic percentage of sulphur varying from 0.1 to 0.5%, and a density of between 0.75 and 1.1.

**12.** Material according to claim 10 or claim 11, **characterised in that** it has a pore volume varying from 0.4 to 1 $cm^3.g^{-1}$, preferably from 0.4 to 0.75 $cm^3.g^{-1}$.

**13.** Material according to one of claims 10 to 12, **characterised in that** at least 10% of its pores have a diameter of between 2 and 50 nm.

**14.** Material according to one of claims 10 to 13, **characterised in that** it has a specific surface area greater than or equal to 500 $m^2.g^{-1}$.

**15.** Material according to one of claims 10 to 14, **characterised in that** it has a full mean mass capacity greater than or equal to 140 F/g measured in a 1 M aqueous $H_2SO_4$ solution or greater than or equal to 120 F/g measured in a 6M aqueous KOH solution.

**16.** Use of a sulphur-modified monolithic porous carbonaceous material according to one of claims 10 to 15, for producing electrodes intended for supercapacitor energy storage systems.

**17.** Electrode, **characterised in that** it comprises a sulphur-modified monolithic porous carbonaceous material as defined in one of claims 10 to 15.

**18.** Supercapacitor, **characterised in that** it comprises at least one electrode according to claim 17.

**19.** Lithium battery, **characterised in that** it comprises at least one electrode according to claim 17.

**FIGURE 1**

**FIGURE 2**

**FIGURE 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009125094 A
- US 5993996 A
- US 6753382 B

**Littérature non-brevet citée dans la description**

- **R. W. PEKALA et al.** *J. Mater. Sci.,* 1989, vol. 24, 3221
- **C. LIN et al.** *Carbon,* 1997, vol. 35, 1271
- **B. MATHIEU et al.** *Ann. Chim. Fr.,* 1997, vol. 22, 19
- **J. L. FIGUEIREDO.** *Carbon,* 1999, vol. 37, 1379
- **B. E. CONWAY.** *Electrochemical Supercapacitors - Scientific Fundamentals and Technological Applications,* 186-190
- **C. T. HSIEH.** *Carbon,* 2002, vol. 40, 667
- **W. S. BAKER et al.** *J. Non-Cryst. Solids,* 2004, vol. 350, 80-87
- **B. ZHANG et al.** *Electrochimica Acta,* 2009, vol. 54, 3708-3713
- **C. VALENZUELA CALAHORRO et al.** *Carbon,* 1990, vol. 28 (2/3), 321-335
- **N. LAKSHMI et al.** *J. Phys. D: Appl. Phys.,* 2006, vol. 39, 2785-2790
- *Colloid and Polymer Science,* 1975, vol. 253, 538-54
- **S. BRUNAUER et al.** *J. Am. Chem. Soc.,* 1938, vol. 60, 309
- Electric vehicle capacitor test procedure manual. **J. R. MILLER ; A. F. BURKE.** DOE/ID10491. 1994, 21-25